# EUROPEAN PATENT APPLICATION

(11) **EP 1 782 898 A1**
(43) Date of publication of application: **09.05.2007**
(21) Application number: 05772402.3
(22) Date of filing: 18.07.2005
(51) Int. Cl.: B21D 53/64, B26D 1/02, B26F 1/44, B44B 11/00

(54) **PATTERN-CUTTING DEVICE, MANUFACTURE METHOD AND MOULD THEREOF**

(30) Priority: 16.07.2004 CN 200410028111
(71) Applicant: Deng, Yeqing, Dongguan, Guangdong 523115 (CN); Angevine, Faye, Taipai, Taiwan (CN)
(72) Inventor: Deng, Yeqing, Dongguan, Guangdong 523115 (CN); Angevine, Faye, Taipai, Taiwan (CN)
(74) Representative: Schreiber, Wolfgang
(86) International application number: PCT/CN2005/001069
(87) International publication number: WO 2006/007787

(57) **Abstract**

Disclosed here in the present invention is a pattern cutter, including a base and cutting blade. The cutting blade is located on the base. The blade forms the shape of pattern to be cut. The said base and cutting blade are of one-piece structure, which is machined to shape at one go through die-casting process. A method for processing such a pattern cutter, which directly utilizes mould to die cast the base and blade that are joined together. The said cutting blade forms the pattern shape that requires to be cut. A mould that is applied to the aforesaid processing method, inside the mould there is arranged a cavity for blade forming purpose. The said blade-forming cavity is of triangle or combination of triangle and rectangle or combination of triangle and trapezoid. The depth of blade-forming cavity is greater than or equal to 2.5mm. The included angle at the sharp end of the blade-forming cavity is smaller than or equal to 60°. The present invention is **characterized by** simple and rational construction, easy to manufacture, low cost, high product accuracy and good consistency, with a wide range of adaptability and better market prospect.

## Description

### Technical Field

The present invention relates to the pattern cutting technique and, more particularly, to a pattern cutter, its processing methods and moulds.

### Background Art

The traditional paper-cutting handicrafts are a kind of work of art gaining immense popular favor. With a large variety of designs or patterns and high value of artistic appreciation, the paper-cutting handicrafts are very suitable to the kindergarten education of children. Abroad, these kind of paper-cutting products are widely used for children education. In the United States, for example, the paper-cutting products are very popularized. The paper, plastic pieces, rubber pieces or similar materials are generally cut into letters, cartoon, animals or human-shaped patterns for cultivation of children's cognitive ability and discrimination. But, the production efficiency is relatively low by using traditional hand paper-cutting method to make paper-cutting patterns, with a poor consistency in designs, hence it is not suitable for mass production. To overcome this deficiency, a process has been adopted to suit the mass production, i.e. firstly machining a pattern cutter for pattern cutting purpose. This pattern cutter is designed to work in such a way that the thin blade with a sharp cutting edge is bent to the pattern to be processed and it is embedded and fixed into a flat plate. Then, this pattern cutter is used to cut paper or similar flat sheet material. The material that is cut has an individual artistic pattern identical to that of the thin cutting blade, i.e. the products that are required. If the products of different shapes are to be made, what to do is only to change the pattern cutter with different shapes. In producing such pattern cutter, the thin cutting blade needs to be bent to pattern shape that is required. The existing method to form such blades is generally to bend them by hand, leading to extremely low production efficiency and poor processing accuracy. However, by use of the Forming Method and Its Equipment for Pattern Cutting Blade, which is disclosed in China Invention Patent Registration No. 01127727.0, to machine the cutting blades that are required, the blade forming speed will be greatly increased and production cost reduced. But, the technological process, through which the cutting blades are firstly machined and then assembled to a pattern cutter, will inevitably increase the processing and assembling steps, thereby the required materials and labor cost are still relatively high.

### Description of the Invention

The object of the present invention is to solve those problems occurring in the prior art and provide a pattern cutter that is simple and rational in construction, easy to produce and convenient to use, low in manufacturing cost and good in product consistency.

Another object of the present invention is to provide a technological method for processing the aforesaid pattern cutter.

Still another object of the present invention is to provide a forming mould, which can materialize the aforesaid processing method.

The objects of the present invention can be accomplished through the following technical solutions. This pattern cutter includes a base and cutting blade. The cutting blade is located on the base. The cutting blade forms the pattern shape to be cut. The said base and cutting blade are of one-piece structure and machined into shape at one go through die-casting process.

On the base, the height of the said cutting blade is greater than or equal to 2.5mm. The angle of the cutting edge of the said blade is smaller than or equal to 60°.

The cross sectional shape of the said blade is of triangle or combination-of triangle and rectangle or combination of triangle and trapezoid.

The surface of the said base is in parallel with the face of cutting blade, and both of them can be either plane or arc curved surface.

The holding legs are integrally made on the said base at the other side opposite to the surface where the cutting blade is located. The said holding legs are used for connection with other fittings or allow an operator to directly hand hold the pattern cutter in operation.

A technological process to form the aforesaid pattern cutter, wherein the features are that a mould is directly utilized to die cast the base and blade which are joined together. The said cutting blade forms the pattern shape that requires to be cut.

The said technological process can include the following concrete procedures: (1) Machine the die casting mould according to the shape of the required product; (2) Place the die casting mould on the die-casting machine, and use the die-casting machine to fill the alloy solution into the cavity of die-casting mould. Take out the die casting product after it is cooled and formed; (3) Conduct surface hardening treatment to the die casting product.

The object of the said surface hardening treatment is to raise the hardness of cutting blade of pattern cutter and extend its operating life. Specifically, the surface of the die casting blade is plated with a metal material of higher hardness, e.g. chromium, nickel, zinc, etc. For chromium plating, the technological conditions are as follows: the concentration of chromium solution is 150~250g/L, operating temperature is generally 50~60°C and current density is generally 40~60A/dm². Through surface hardening treatment, the hardness of die casting blade can generally be raised from around HRC10 to HRC30 and above.

The said alloy comprises the aluminum alloy, zinc alloy or other alloys, with the preference of zinc alloy.

In order to achieve the aforesaid process, the die casting mould has a blade-forming cavity, which is of triangle or combination of triangle and rectangle or combination of triangle and trapezoid. The depth of blade-forming cavity is greater than or equal to 2.5mm, with an included angle at its sharp end being smaller than or equal to 60°.

The sharp wall of the said blade-forming cavity can be formed either by combination of two mould pieces or through the machining on either of moulds. As to one mould piece, the blade-forming cavity should have a vent hole, which is used to discharge air when the alloy solution is filled into the cavity so as to avoid producing any air-trapped die casting product or any such item as produced due to insufficient solution in the cavity.

The cover die or ejector die of the said die-casting mould is joined together with a replaceable core piece. The said core piece is drilled with a hole for fitting an insert block. On the end face of the insert block is machined a blade-forming groove corresponding to the blade shape of pattern cutter. By use of the mould of this structure, the insert block can be freely changed according to the different processing patterns, having a good adaptability.

In comparison to the prior art, the present invention has the following advantageous effects. (1) Simple and rational construction. This pattern cutter comprises a base and cutting blade of one-piece structure. The construction has been further simplified, whereas the existing pattern cutter that needs the base and cutting blade to be machined separately, then embedded and assembled. And as compared with the prior art, it is more rational and there will be no such accidents that the blade breaks loose from the base due to improper installation. So, it is safer in operation. (2) Easy to make and low in cost. The present invention utilizes die-casting process to produce pattern cutter, with a high production rate. Generally the output is 240 pieces per hour per unit. The use of the present invention can greatly increase work efficiency, reduce product cost and improve economy efficiency. (3) High product accuracy and good consistency. The present invention adopts a mould in production. So long as the machining accuracy of the mould and corresponding production conditions are guaranteed, the products that are turned out can have rather high processing quality, with less product errors and good consistency. (4) Good adaptability. According to the present invention, the pattern cutters for cutting the different shapes of patterns can be formed only by changing the shape of core seat in the mould, with a wide range of adaptability.

### Description of the Drawings

Fig. 1 is the schematic view showing the construction of pattern cutter of the present invention.
Fig. 2 is the schematic view showing the back construction of the pattern cutter as shown in Fig. 1.
Fig. 3 is the schematic view showing the construction of the die casting mould for forming the pattern cutter as shown in Fig. 1.
Fig. 4 is the schematic view showing the construction of the A core piece of the die casting mould as shown in Fig. 3.
Fig. 5 is the top view of A core piece as shown in Fig. 4.
Fig. 6 is the schematic view showing another construction of the pattern cutter of the present invention.

### Description of the Particular Embodiments

A detailed description of the present invention is given below in conjunction with the working examples and accompanying drawings, but the implementation modes of the present invention are not limited to those.

### Working Example 1

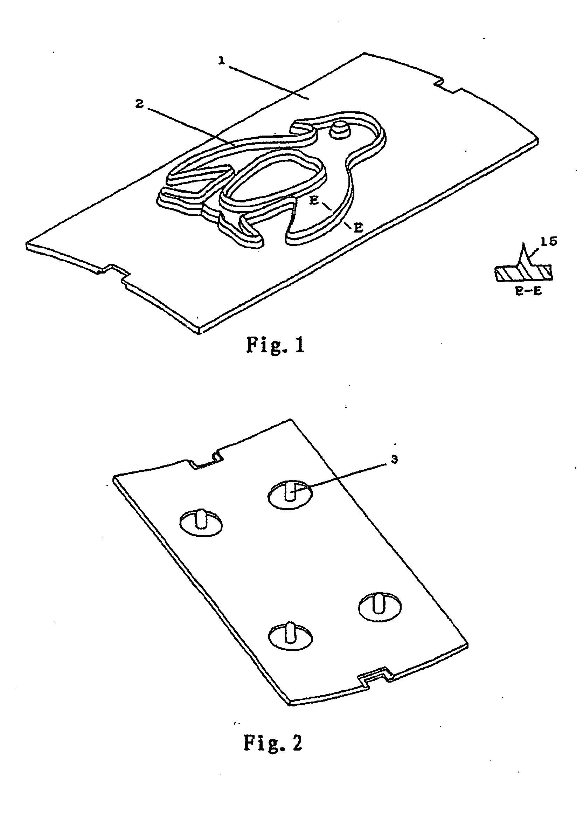

Fig. 1 and Fig. 2 show the concrete construction of the pattern cutter of the present invention. As shown in Fig. 1, the pattern cutter is composed of the base 1 and cutting blade 2. The base 1 is an arc plate with a certain radian. The cutting blade 2 is located on the base 1, with the surface of its cutting edge being in parallel to that of base 1 (both being of arc curved surface). The cutting blade 2 forms a penguin pattern shape to be cut. The said base 1 and cutting blade 2 are of one-piece construction. The specific cross sectional structure is shown in E-E view of Fig. 1. The cutting blade 2 has a cross sectional shape similar to triangle (the exact shape is the combination of triangle and trapezoid). The height of cutting blade 2 is 3mm on the base 1. The cutting blade 2 has an angle of 30° at the cutting edge. On the surface of cutting blade 2 there is a plating coat 15. The holding legs 3 are integrally made on the said base 1 at the other side opposite to the surface where the cutting blade 2 is located, as shown in Fig. 2. The said holding legs 3 are used for connection with other fittings or for hand held purpose in operation.

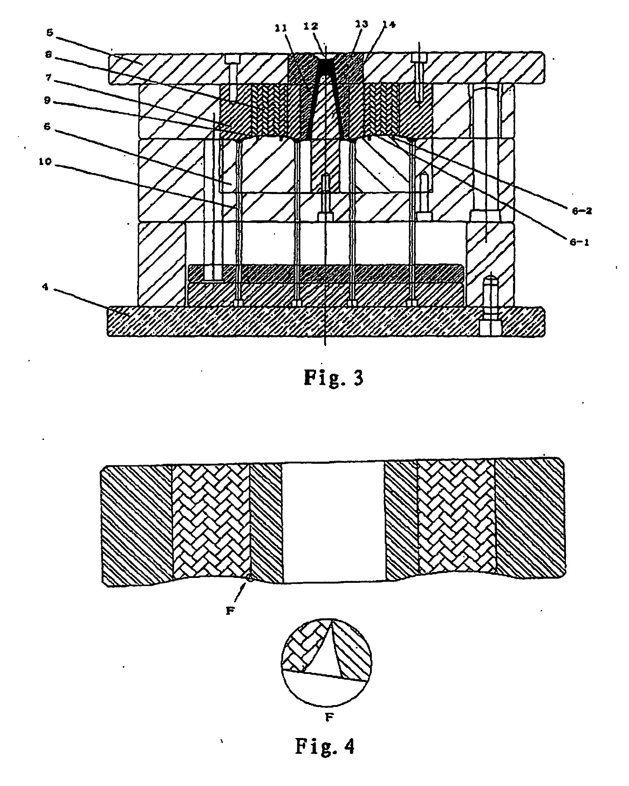

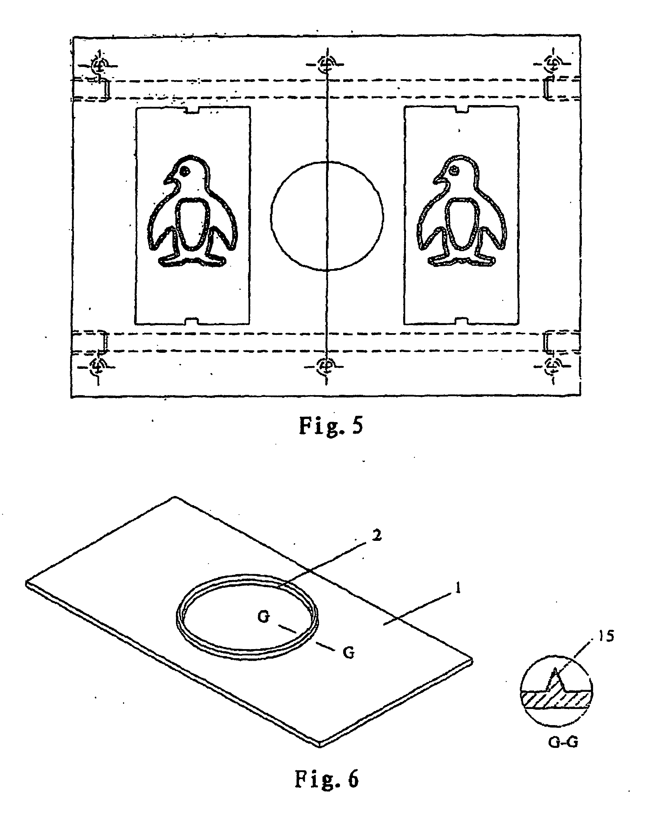

Fig. 3~Fig. 5 show the concrete structure of the die casting mould for processing the aforesaid penguin pattern cutter. As shown in Fig. 3, the die casting mould comprises the ejector die 4 and cover die 5. On the ejector die 4 is fitted a B core piece 6. On the B core piece 6, there are two protruding arc surfaces 6-1, which are symmetrical to each other. On the arc surfaces 6-1, there are concave holes 6-2 for forming the holding legs 3 on the back of pattern cutter. On the cover die 5, A core piece 7 is fitted. In the two square throughholes of the A core piece 7, the identical square insert blocks 8 are fitted respectively. On one end of each square insert block 8 is machined a blade-forming groove 9 of penguin shape, as shown in Fig. 5. The blade-forming groove 9 close to the edge of square throughhole is mated with that of the square throughhole of A core piece 7 by means of the insert block 8, as shown in Fig. 4. The rest of the blade-forming groove 9 is machined to shape on the end face of the insert block 8 separately. The whole cross sectional dimensions and shape of the blade-forming groove 9 are the same as the blade that is to be formed. The said A core piece 7 is mated with B core piece 6 as to form an integral mould cavity. The mould cavity comprises the blade-forming cavity and base cavity which are communicated to each other. The push rod 10 is connected to the mould cavity so as to push out the die casting product after it is formed. The lateral cavity has also a vent hole used to discharge air when the alloy solution is being filled into the cavity. The base cavity is through with the pouring opening 12 by way of pouring passage 11. The said pouring openings 12 are symmetrically arranged on the symmetrical spindles in the central round throughholes of A core piece 7. The said pouring passage 11 is almost of conical construction, which is formed by mating the pouring head piece 13 and C core piece 14 symmetrically arranged via a shaft.

The technological processes by using the aforesaid mould to form pattern cutter comprise the following specific procedures. After the mould is assembled, it is installed on the die-casting machine. The die-casting machine pours the 400°C zinc alloy solution into the cavity of the mould through the pouring opening under the pressure of 25~40MPa. The die casting product can then be taken out after the pressure has-been maintained and cooled to shape. Then the die casting piece can be chromium plated. The concentration of chromium plating solution is 200g/L, at the operating temperature of 55°C and the current density of 50A/dm². After chromium plating, the hardness of the blade of pattern cutter can be raised to HRC 30 and above.

### Working Example 2

Fig. 6 shows another construction of the pattern cutter as set forth in the present invention. As shown in Fig. 6, this pattern cutter comprises a base 1 and cutting blade 2. The base 1 is a flat plate, with the cutting blade 2 located on the base 1. The surface for the cutting edge of the blade is in parallel to that of the base 1 (both of them being of plane). The cutting blade 2 forms the circular pattern shape that is to be cut. The said base 1 and the cutting blade 2 are of one-piece structure. The specific cross sectional structure is as shown in G-G view of Fig. 6. The cross sectional shape of the cutting blade 2 is of triangle. The height of the cutting blade 2 is 4mm on the base 1. The blade 2 has an angle of 40° at the cutting edge. The cutting blade 2 is surfaced with a chromium-plating coat 15.

The methods for manufacturing the pattern cutter as set forth in the present working example are the same as those in the working example 1 in addition to the following features. The alloy material that is used is the aluminum alloy. The cutting blade is surface treated with chromium plating after the die-casting product is taken out from the mould. The concentration of chromium plating solution is 250g/L, the operating temperature is 60°C, and the current density is 60A/dm2. After chromium plating treatment, the hardness of cutting blade of the pattern cutter is raised to HRC 30 and above.

## Claims

1. A pattern cutter, comprising a base and a cutting blade. The cutting blade is located on the base. The cutting blade forms the shape of the pattern to be cut. The feature is that the said base and cutting blade are of one-piece structure, which is machined to shape at one go through die-casting process.

2. The pattern cutter as set forth in claim 1, wherein the features are that on the base, the height of cutting blade is greater than or equal to 2.5mm and the cutting edge of the said blade has an angle of small than or equal to 60°.

3. The pattern cutter as set forth in claim 1, wherein the feature is that the cross sectional shape of the said blade is of triangle or combination of triangle and rectangle or combination of triangle and trapezoid.

4. The pattern cutter as set forth in claim 1, wherein the feature is that the surface of the said base is in parallel with that of cutting blade. Both of them are of plane or arc curved surface.

5. The processing method for the pattern cutter as set forth in any one of claims 1~4, wherein the features are that a mould is directly utilized to die cast the base and blade which are joined together and the said cutting blade forms the pattern shape that requires to be cut.

6. The processing method for the pattern cutter as set forth in claim 5, wherein the feature is that the following procedures are involved. (1) Machine the die casting mould according to the shape of the required product; (2) Place the die casting mould on the die-casting machine, and use the die-casting machine to fill the alloy solution into the cavity of die-casting mould. Take out the die casting product after it is cooled and formed; (3) Conduct surface hardening treatment to the die casting product.

7. The processing method for the pattern cutter as set forth in claim 6, wherein the feature is the said surface hardening treatment refers to the plating of chromium, nickel or zinc on the surface of the cutting blade of die casting product.

8. The mould applied to the processing method for pattern cutter as set forth in any one of claims 5~7, wherein the features are that the mould has a blade-forming cavity, which is of triangle or combination of triangle and rectangle or combination of triangle and trapezoid, and the depth of blade-forming cavity is greater than or equal to 2.5mm, with an included angle at its sharp end being smaller than or equal to 60°.

9. The mould as set forth in claim 8, wherein the feature is the sharp wall of the said blade-forming cavity is formed either by combination of two mould pieces or through the machining on either moulds.

10. The mould as set forth in claim 8, wherein the features are the cover die or ejector die of the said die-casting mould is joined together with a replaceable core piece, and the said core piece is drilled with a hole for fitting an insert block. End face of the said insert block is machined with a blade-forming groove corresponding to the shape of blade of pattern cutter.
